# EUROPÄISCHE PATENTANMELDUNG

(11) **EP 1 498 845 A2**
(43) Veröffentlichungstag der Anmeldung: **19.01.2005**
(21) Anmeldenummer: 04016784.3
(22) Anmeldetag: 16.07.2004
(51) Int. Cl.: G06T 1/60, G06T 5/00

(54) **Verfahren und System zur Bildsignaldatenverarbeitung**

(30) Priorität: 17.07.2003 DE 10332734
(71) Anmelder: Silicon Optix Inc., San Jose, CA 95110 (US)
(72) Erfinder: Winzker, Marco, 30171 Hannover (DE)
(74) Vertreter: Körner, Peter

(57) **Zusammenfassung**

Bei einem Verfahren zur Signaldatenverarbeitung, insbesondere der Bildsignaldatenverarbeitung, ist ein erstem Speicher (M1) vergleichsweise großer Speicherkapazität zur Aufnahme von Bilddaten eines ursprünglichen Bildes vorgesehen ist, wobei das ursprüngliche Bild aus mindestens einem ersten Bildteil und aus einem zweiten Bildteil besteht und der erste Bildteil durch erste Eingangs-Bilddaten definiert ist, während der zweite Bildteil im wesentlichen homogen strukturiert ist. Ferner ist ein zweiter Speicher (C1) vergleichsweise geringer Speicherkapazität vorgesehen.

Zur Modifikation mindestens eines Bildpunktes des ursprüngliches Bildes in einem weiteren Bild (R) wird mindestens ein Teil der ersten Eingangs-Bilddaten aus dem ersten Speicher (M1) in den zweiten Speicher übertragen und aus dem Teil der ersten Eingangs-Bilddaten, die im zweiten Speicher (C1) abgespeichert sind, erste Ausgangs-Bilddaten berechnet werden, aus denen das weitere Bild (R) generiert wird. Zum Ersatz von ersten Bilddaten, die nicht im zweiten Speicher (C1) abgespeichert sind, werden Daten nach mindestens einem Fehlerverdeckungsverfahren generiert. Zur Generierung des gesamten zweiten Bildteils im weiteren Bild (R) wird genau eine Information verwendet.

## Beschreibung

Die Erfindung betrifft ein Verfahren und ein System zur Bildsignaldatenverarbeitung nach dem Oberbegriff der Ansprüche 1 bzw. 13.

Ein Anwendungsgebiet einer solchen Bildverarbeitung mit gleichzeitiger Koordinatentransformation ist die digitale Verzeichniskorrektur von Bilddaten. Bei der Aufnahme und/oder Wiedergabe von Bilddaten können Verzerrungen durch optische Bauelemente, elektronische Bauelemente, durch Projektion oder andere Effekte auftreten. Derartige Verzerrungen sind unerwünscht, da sie z.B. eine Auswertung der Bilddaten erschweren oder von einem Betrachter als schlechte Bildqualität empfunden werden.

Um eine Verzerrung bei der Aufnahme von Bilddaten zu korrigieren, werden Bilddaten nach der Aufnahme entzerrt. Um eine Verzerrung bei der Darstellung von Bilddaten zu korrigieren, werden Bilddaten vor der Darstellung vorverzerrt, so dass sich die Überlagerung von Vorverzerrung und Verzerrung bei der Darstellung vollständig oder teilweise aufhebt. Die Korrektur der Aufnahmeverzerrung, die Vorverzerrung für die Darstellung sowie die Kombination beider Verarbeitungsschritte wird als Verzeichniskorrektur bezeichnet.

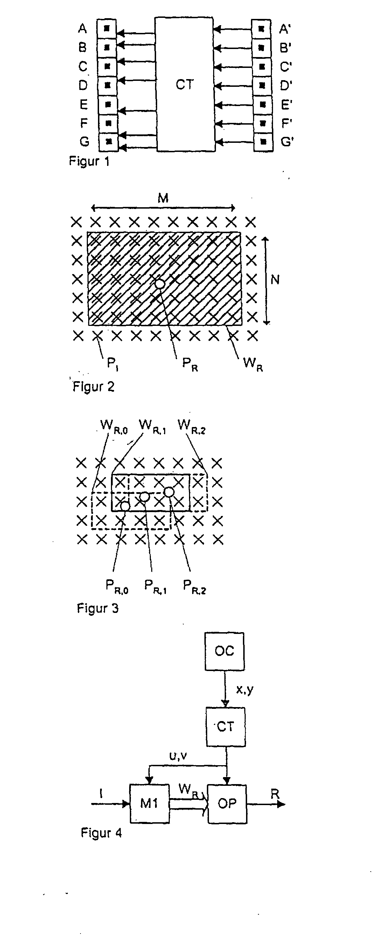

In Wolberg, 'Digital Image Warping', IEEE Computer Society Press, 1990 ist 'Inverse Mapping' als Verfahren zur digitalen elektronischen Verzeichniskorrektur beschrieben. Die prinzipielle Arbeitsweise ist in Figur 1 beschrieben. Den Ausgangswerten A', B', C', ... G' werden durch eine Koordinatentransformation (CT) korrespondierende Eingangswerte A, B, C, ... G zugewiesen. Dabei kann der Fall auftreten, dass den Ausgangswerten nicht direkt ein Eingangswert zugeordnet wird, sondern dass einem Ausgangswert eine Position zwischen Eingangswerten entspricht.

Die Koordinatentransformation bestimmt dabei die Verzeichniskorrektur. Um mit einem System verschiedene Verzeichnungen korrigieren zu können, ist es erforderlich, die Koordinatentransformation in gewissen Grenzen variieren zu können. Da das hier beschriebene Verfahren unabhängig von der Implementierung der Koordinatentransformation ist, wird hierauf nicht näher eingegangen.

Zur Berechnung eines Ausgangswertes dessen Position sich zwischen Eingangswerten befindet müssen mehrere Eingangswerte in der Umgebung der errechneten Position betrachtet werden. Für Bilddaten ist dieser Fall in Figur 2 dargestellt. Aus den Eingangswerten P₁ soll ein .Ausgangswert P_{R} berechnet werden. Dazu müssen die Eingangsdaten des Fensters W_{R} mit der Höhe N und der Breite M zur Verfügung stehen. Die Werte für M und N hängen von der Güte der Berechnung des Ausgangswertes ab. Je größer M und N sind, um so besser kann das Ergebnis der Berechnung sein und um so größer ist der Aufwand.

Zur Verzeichniskorrektur muss für jeden Bildpunkt des auszugebenden Bildes die entsprechende Position im Eingangsbild errechnet und die Bilddaten des korrespondierenden Fensters betrachtet werden. Figur 3 zeigt drei Ausgangswerte P_{R,0}, P_{R,1} und P_{R,2} und die korrespondierenden Fenster W_{R,0}, W_{R,1} und W_{R,2}. Die Werte für M und N sind dabei gegenüber Figur 2 verändert.

### Stand der Technik

Eine direkte Umsetzung des beschriebenen Verfahrens ist in Figur 4 dargestellt. Das Eingangsbild I wird in einem Speicher M1 gespeichert. Die Ausgabesteuerung OC generiert nun für jeden Bildpunkt des Ausgangsbildes R dessen Koordinaten x,y. Diese Koordinaten werden von der Koordinatentransformation CT in transformierte Koordinaten u,v umgewandelt und an den Speicher M1 sowie die Ausgabeverarbeitung OP weitergegeben. Der Speicher gibt das Fenster WR für jeden Bildpunkt an die Ausgabeverarbeitung, welche das Ausgangsbild R berechnet.

Für jeden Ausgabebildpunkt müssen bei dieser Umsetzung M*N Bildpunkte aus dem Speicher M1 gelesen werden. Dies entspricht einer sehr hohen Datenrate, welche zu einem hohen Aufwand führt. In Figur 4 ist dies durch einen breiten Pfeil dargestellt. Da für jeden Ausgabebildpunkt M*N neue Bildpunkte eingelesen werden, muss berücksichtigt werden, dass der Speicherzugriff sehr unregelmäßig sein kann. Einen solchen wahlfrelen Zugriff zu ermöglichen, erfordert ebenfalls einen sehr hohen Aufwand.

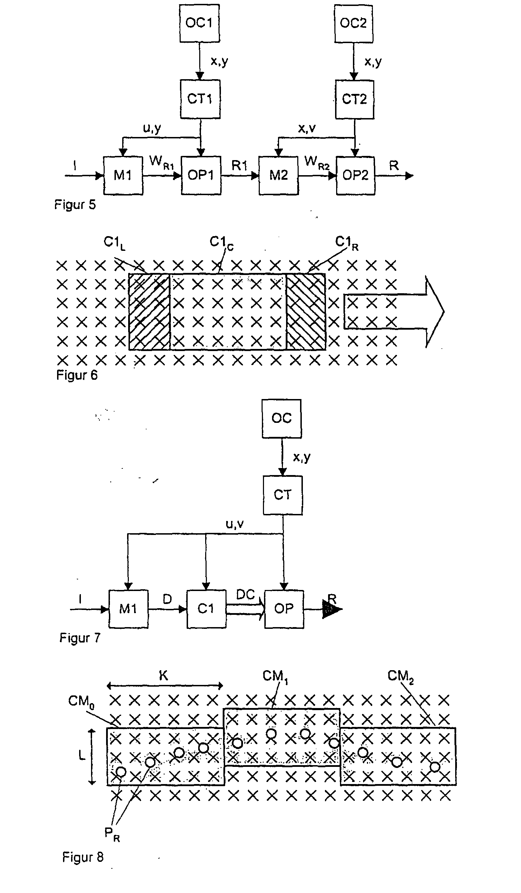

In Wolberg, 'Digital Image Warping'," IEEE Computer Society Press, 1990, wird ein Verfahren mit reduzierten Anforderungen an den Speicherzugriff beschrieben. Die zweidimensionale Verzeichniskorrektur wird dabei in zwei eindimensionale Verzeichniskorrekturen aufgespalten. Figur 5 illustriert dieses Verfahren. Dabei wird das im Speicher M1 gespeicherte Eingangsbild zunächst in einer Dimension, d.h. horizontal oder vertikal, verarbeitet.

Hierzu erzeugt die Ausgabesteuerung OC1 für jeden Bildpunkt eines Zwischenbildes R1 dessen Koordinaten x,y. Diese Koordinaten werden von der Koordinatentransformation CT1 in einer Dimension transformiert, während die andere Koordinate übernommen wird. An den Speicher M1 und die erste Ausgabeverarbeitung OP1 werden damit die Koordinaten u,y weitergegeben. Aufgrund der eindimensionalen Verarbeitung ist die Höhe N des Verarbeitungsfensters W_{R1} gleich 1. Das Zwischenbild R1 wird in einem Speicher M2 gespeichert. Mit diesem Zwischenbild erfolgt die Verarbeitung der zweiten Dimension.

Die Ausgabesteuerung OC2 erzeugt für jeden Bildpunkt des Ausgangsbildes R dessen Koordinaten x,y. Diese Koordinaten werden von der Koordinatentransformation CT2 in der noch nicht bearbeiteten Dimension transformiert. An den Speicher M2 und die zweite Ausgabeverarbeitung OP2 werden die Koordinaten x,v weitergegeben und das Ausgangsbild R berechnet. Auch die Höhe N des Verarbeitungsfensters W_{R2} ist gleich 1.

Bei dieser Vorgehensweise wird die Übertragungsbandbreite zwischen Speicher und Verarbeitungseinheit reduziert. Durch die zeilen- und spaltenweise Verarbeitung ist darüber hinaus der Speicherzugriff sehr regulär und damit aufwandsarm zu implementieren. Nachteilig ist jedoch der zusätzlich erforderliche Speicher M2 zwischen erstem und zweitem Verarbeitungsschritt. Außerdem ist durch die Aufspaltung in zwei Verarbeitungsschritte entweder der Speicher M2 mit hoher Wortbreite und damit hohem Speicherbedarf auszuführen oder ein Speicher M2 mit geringer Wortbreite führt zu Rechenfehlern.

In US3986171 wird ein System beschrieben, bei dem ein kleiner schneller Cache-Speicher eine Kopie von einem Teil des Hauptspeichers enthält. Ein Speichercontroller entscheidet, ob ein Zugriff durch den schnelleren Cache-Speicher abgefangen werden kann, oder ob auf den Hauptspeichers zugegriffen werden muss. Dieses Verfahren kann jedoch nicht angewendet werden, wenn die Verarbeitung schritthaltend mit der Ausgabe, d.h. in Echtzeit, erfolgen muss, da die Zeit bis zur Bereitstellung eines Speicherinhaltes nur im zeitlichen Mittel, nicht jedoch im ungünstigen Fall reduziert wird.

In Volkers et.al, "Cache Memory Design For The Data Transport To Array Processors," Proc. of IEEE Int. Symposium on Circuits and Systems, January 1990, pp. 49-52. wird ein hierarchisches Speichersystem dahingehend erweitert, dass der Inhalt des Cache-Speicher einen rechteckigen Bereich des Hauptspeichers umfasst. Dies ist in Figur 6 dargestellt. Auf Anforderung eines Controllers kann der Inhalt des Cache-Speicher derart modifiziert werden, dass Bildpunkte aus dem linken Bereich des Speichers C1_{L} nicht länger gespeichert werden und die frei werdenden Speicherzellen mit Eingangswerten C1_{R} rechts vom aktuellen Inhalt C1_{C}des Cache-Speichers geladen werden. Der Cache entspricht damit einem Fenster, welches sich über das Eingangsbild schiebt.

Eine Anordnung zur Umsetzung dieses Verfahrens ist in Figur 7 dargestellt. Ausgabesteuerung OC und Koordinatentransformation CT erzeugen transformierte Koordinaten u,v. Diese werden an den Speicher M1 weitergegeben, welcher Daten D an einen Cache-Speicher C1 weitergibt. Der Cache-Speicher C1 gibt Daten DC an die Ausgabeverarbeitung OP, welche das Ausgangsbild R berechnet.

Zur Anwendung dieses Verfahrens muss sichergestellt sein, dass für die Verarbeitung stets nur Bildpunkte aus dem aktuellen Bereich C1_{C} (Figur 6) des Cache-Speichers. Für eine Bildverarbeitung mit gleichzeitiger Koordinatentransformation ist dieses Verfahren jedoch nicht anwendbar, da nicht sichergestellt ist, dass die benötigten Eingangssignale aus einem horizontal über das Bild laufenden Bereich stammen.

In DE 100 52 263 A1 wird ein hierarchisches Speichersystem beschrieben, bei dem ein Cache-Speicher einen Bereich des Hauptspeichers umfasst, der nicht notwendigerweise rechteckig ist. Sind Daten, auf die zugegriffen werden sollen, nicht im Cache-Speicher, erfolgt eine Fehlerverdeckung. Dieses Verfahren berücksichtigt jedoch die Bildkanten nicht.

### Aufgabe

Der vorliegenden Erfindung liegt die Aufgabe zugrunde, ein Verfahren und ein System zur Bildsignaldatenverarbeitung anzugeben, wobei der Zugriff auf den Speicher für das Eingangsbild mit geringem Aufwand erfolgt.

Ein Verarbeitungsfenster kann sich von dem vorangegangenen Verarbeitungsfenster sowohl in der horizontalen als auch in der vertikalen Position unterscheiden, wie dies in Figur 3 dargestellt ist. Der Abstand aufeinanderfolgender Verarbeitungsfenster ist variabel und hängt von der gewählten Koordinatentransformation und der aktuellen Position der zu berechnenden Ausgangswerte ab.

Die Lösung dieser Aufgabe erfolgt mit den Merkmalen des Anspruchs 1.

Die Erfindung wird nun anhand der Figuren beschrieben.

Aus einem Hauptspeicher werden Daten derart in einem Cache-Speicher abgelegt, dass ein nicht horizontal verlaufender Bildausschnitt gespeichert werden kann und bei einem Zugriff auf Daten, die sich nicht im Cache-Speicher befinden, eine Fehlerverdeckung erfolgt.

Der Teil des Hauptspeichers ("erster Speicher"), der im Cache-Speicher ("zweiter Speicher") abgelegt wird, ist in Figur 8 dargestellt. In der Umgebung der Punkte P_{R} werden Daten des Hauptspeichers benötigt. Der Cache-Speicher umfasst deshalb Segmente der Höhe L und der Breite K, die sich horizontal aneinanderfügen, in der vertikalen Position jedoch unterscheiden können. Die Breite K der Segmente kann derart gewählt werden, dass durch einen regulären Speicherzugriff auf den Hauptspeicher M1 ein geringer Aufwand erforderlich ist. Der vertikale Versatz benachbarter Segmente sollte kleiner als L sein; dies ist jedoch nicht zwingend erforderlich. Ebenfalls sollte L größer oder gleich der Höhe N des Verarbeitungsfensters W_{R} sein (vergleiche Figur 2); dies ist jedoch ebenfalls nicht zwingend erforderlich.

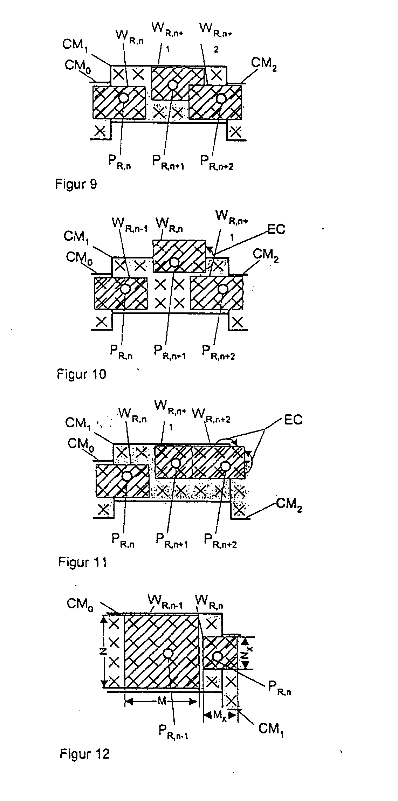

Die Berechnung der Ausgangsdaten stellt Figur 9 dar. Für einen Ausgangswert P_{R,n} befinden sich die Daten des Fensters W_{R,n} im Cache-Speicher und können für die Berechnung verwendet werden. Ebenso erfolgt eine Berechnung für die Ausgangswerte P_{R,n+1} und P_{R,n+2} mit den Fenstern W_{R,n+1} und W_{R,n+2}.

Daten die nicht zum aktiven Bild gehören, sollen durch einen Standardwert dargestellt werden. Dieser Standardwert entspricht dem üblichen Bildhintergrund und ist oftmals als "schwarz" oder "weiß" anzusehen. Diese Daten müssen nicht im Cache-Speicher abgelegt werden, statt dessen kann eine Steuerungseinheit der Verarbeitung signalisieren, dass diese Daten den Standardwert enthalten.

Für den Fall, dass Daten eines Fensters W_{R,n} nicht im Cache-Speicher sind, erfolgt eine Fehlerverdeckung indem Cache-Speicher und/oder Ausgangsverarbeitung das Fehlen der Daten erkennen und hierauf reagieren. Für die Fehlerverdeckung sind verschiedene Verfahren möglich. Dazu gehören Randwiederholung, diagonale Mittelung und Anpassung der Verarbeitung. Zur Fehlerverdeckung können auch mehrere Maßnahmen kombiniert werden.

Figur 10 illustriert die Randwiederholung. Für das Fenster W_{R,n} sind drei gestrichelt gekennzeichnete Bildpunkte nicht im Cache-Speicher vorhanden. Für die Fehlerverdeckung (EC) werden statt dessen für die Verarbeitung die vertikal benachbarten Randwerte des Cache-Speichers verwendet. Zum Ersatz eines fehlenden Bildpunktes können auch horizontal benachbarte Bildpunkte verwendet werden.

Figur 11 illustriert die diagonale Mittelung. Für das Fenster W_{R,n} ist ein gestrichelt gekennzeichneter Bildpunkt am Übergang zweier Speicherbereiche nicht im Cache-Speicher vorhanden. Für die Fehlerverdeckung (EC) wird statt dessen aus zwei oder mehr benachbarten Bildpunkten ein Ersatz berechnet.

Figur 12 illustriert die Anpassung der Verarbeitung. Für die Berechnung der Ausgangswerte wird üblicherweise ein Fenster der Größe M*N verwendet. In Figur 12 ist dies für den Ausgangswert P_{R,n-1} das Fenster W_{R,n-1} mit der Größe 4*4. Falls dieser Bereich nicht im Cache-Speicher zur Verfügung steht, erfolgt die Verarbeitung mit einem Fenster der Größe Mₓ*Nₓ, wobei Mₓ kleiner als M und/oder Nₓ kleiner als N ist. In Figur 12 ist dies für den Ausgangswert P_{R,n} das Fenster W_{R,n} mit der Größe 2*2.

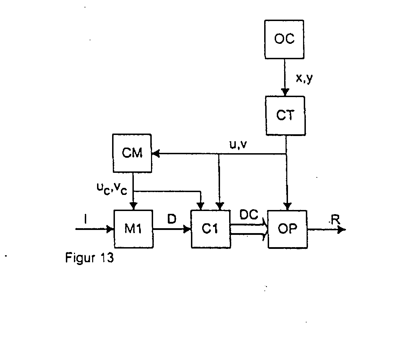

Ein System zur Bildverarbeitung mit gleichzeitiger Koordinatentransformation entsprechend dem beschriebenen Verfahren ist in Figur 13 dargestellt. Das Eingangsbild I wird im Hauptspeicher M1 gespeichert. Die Ausgabesteuerung OC generiert für jeden Bildpunkt des Ausgangsbildes R dessen Koordinaten x,y. Diese Koordinaten werden von der Koordinatentransformation CT in transformierte Koordinaten u,v umgewandelt. Eine Steuerungseinheit für den Cache-Speicher CM ermittelt, welche Speicherbereiche, gekennzeichnet durch die Koordinaten u_{c},v_{c}, im Cache-Speicher gespeichert werden sollen. Diese Daten D werden vom Speicher M1 an den Cache-Speicher C1 übertragen. Bei einer Anforderung eines Bildpunktes u,v für die Verarbeitung ermittelt der Cache-Speicher C1 dann, ob die Daten zum aktiven Bild gehören und im Cache-Speicher vorhanden sind. Entsprechend dieser Überprüfung werden die Daten oder Informationen zur Fehlerverdeckung DC an die Ausgabeverarbeitung OP weitergegeben, welche das Ausgangsbild R berechnet.

## Patentansprüche

**1.** Verfahren zur Signaldatenverarbeitung, insbesondere der Bildsignaldatenverarbeitung, wobei ein erster Speicher (M1) vergleichsweise großer Speicherkapazität zur Aufnahme von Bilddaten eines ursprünglichen Bildes vorgesehen ist, wobei das ursprüngliche Bild aus mindestens einem ersten Bildteil und aus einem zweiten Bildteil besteht, wobei der erste Bildteil durch erste Eingangs-Bilddaten definiert ist, und wobei der zweite Bildteil im wesentlichen homogen strukturiert ist, wobei ein zweiter Speicher (C1) vergleichsweise geringer Speicherkapazität, insbesondere ein Cache-Speicher, vorgesehen ist, und wobei eine Steuerung (OC, CT, CM, OP) vorgesehen ist, der ein Steuerungsprogramm zugeordnet ist, wobei zur Modifikation mindestens eines Bildpunktes des ursprüngliches Bildes in einem weiteren Bild (R) das Steuerungsprogramm in der Weise ausgestaltet ist, dass mindestens ein Teil der ersten Eingangs-Bilddaten aus dem ersten Speicher (M1) in den zweiten Speicher übertragen wird, und wobei aus dem Teil der ersten Eingangs-Bilddaten, die im zweiten Speicher (C1) abgespeichert sind, erste Ausgangs-Bilddaten berechnet werden, aus denen das weitere Bild (R) generiert wird,
**dadurch gekennzeichnet, dass**
das Steuerungsprogramm weiterhin in der Weise ausgestaltet ist, dass zum Ersatz von ersten Bilddaten, die nicht im zweiten Speicher (C1) abgespeichert sind, Daten nach mindestens einem Fehlerverdeckungsverfahren generiert werden, und dass zur Generierung des gesamten zweiten Bildteils im weiteren Bild (R) genau eine Information verwendet wird.

**2.** Verfahren nach Anspruch 1, **dadurch gekennzeichnet, dass** die Daten, die von dem ersten Speicher (M1) in den zweiten Speicher (C1) übertragen werden, Bereiche vorgegebener Größe umfassen.

**3.** Verfahren nach einem der vorstehenden Ansprüche, **dadurch gekennzeichnet, dass** Bereiche, die von dem ersten Speicher (M1) in den zweiten Speicher (C1) übertragen werden, sich horizontal aneinander anfügen.

**4.** Verfahren nach Anspruch 3, **dadurch gekennzeichnet, dass** eine Cache-Steuerung von Verarbeitungseinheiten vorgegebenen Adressen entsprechend der horizontalen Adresskomponente den Bereichen des Eingangsbildes zuweist und aus den vertikalen Adresskomponenten die vertikale Position der Bereiche ermittelt.

**5.** Verfahren nach einem der Ansprüche 2 bis 4, **dadurch gekennzeichnet, dass** die Bereiche, die von dem ersten Speicher in den zweiten Speicher übertragen werden, sich vertikal aneinander anfügen..

**6.** Verfahren nach Anspruch 5, **dadurch gekennzeichnet, dass** eine Cache-Steuerung von Verarbeitungseinheiten vorgegebenen Adressen entsprechend der vertikalen Adresskomponente den Bereichen des Eingangsbildes zuweist und aus den horizontalen Adresskomponenten die horizontalen Position der Bereiche ermittelt.

**7.** Verfahren nach einem der vorstehenden Ansprüche, **dadurch gekennzeichnet, dass** die Position der horizontalen Bereiche in Abhängigkeit des Mittelwerts der horizontalen Adresskomponenten festgesetzt wird, und/oder dass die Position der vertikalen Bereiche in Abhängigkeit des Mittelwerts der vertikalen Adresskomponenten festgesetzt wird.

**8.** Verfahren nach einem der Ansprüche 1 bis 6, **dadurch gekennzeichnet, dass** die Position der horizontalen Bereiche in Abhängigkeit des Minimums oder des Maximums der horizontalen Adresskomponenten festgesetzt wird, und/oder dass die Position der vertikalen Bereiche in Abhängigkeit des Minimums oder des Maximums der vertikalen Adresskomponenten festgesetzt wird.

**9.** Verfahren nach einem der vorhergehenden Ansprüche, **dadurch gekennzeichnet, dass** eine Fehlerverdeckung dadurch erfolgt, dass bei Zugriff auf ein sich nicht im zweiten Speicher befindliches Datenelement ein anderes, sich im zweiten Speicher befindliches Datenelement, geliefert wird.

**10.** Verfahren nach einem der Ansprüche 1 bis 8, **dadurch gekennzeichnet, dass** eine Fehlerverdeckung dadurch erfolgt, dass bei Zugriff auf ein sich nicht im zweiten Speicher befindliches Datenelement ein aus anderen, sich im zweiten Speicher befindlichen Datenelement, ein Ergebnis des Zugriffs berechnet wird.

**11.** Verfahren nach einem der Ansprüche 1 bis 8, **dadurch gekennzeichnet, dass** eine Fehlerverdeckung dadurch erfolgt, dass bei Zugriff auf ein sich nicht im zweiten Speicher befindliches Datenelement die Verarbeitungseinheit über den nicht erfolgreichen Zugriff informiert wird und die Verarbeitungseinheit ihre Verarbeitung an die verfügbaren Daten anpasst.

**13.** System zur Durchführung des Verfahrens nach einem der vorstehenden Ansprüche, mit. einem ersten Speicher (M1) vergleichsweise großer Speicherkapazität zur Aufnahme von Bilddaten eines ursprünglichen Bildes vorgesehen ist, wobei das ursprüngliche Bild aus mindestens einem ersten Bildteil und aus einem zweiten Bildteil besteht, wobei der erste Bildteil durch erste Eingang-Bilddaten definiert ist, und wobei der zweite Bildteil im wesentlichen homogen strukturiert ist, mit einem zweiten Speicher (C1) vergleichsweise geringer Speicherkapazität, insbesondere einem Cache-Speicher, und mit einer Steuerung (OC, CT, CM, OP), der ein Steuerungsprogramm zugeordnet ist, wobei zur Modifikation mindestens eines Bildpunktes des ursprüngliches Bildes in einem weiteren Bild (R) das Steuerungsprogramm in der Weise ausgestaltet Ist, dass mindestens ein Teil der ersten Eingangs-Bilddaten aus dem ersten Speicher (M1) in den zweiten Speicher übertragen wird, und wobei aus dem Teil der ersten Eingangs-Bilddaten, die im zweiten Speicher (C1) abgespeichert sind, erste Ausgangs-Bilddaten (AD1) berechnet werden, aus denen das weitere Bild (R) generiert wird,
**dadurch gekennzeichnet, dass**
das Steuerungsprogramm weiterhin in der Weise ausgestaltet ist, dass zum Ersatz von ersten Bilddaten, die nicht im zweiten Speicher (C1) abgespeichert sind, Daten nach mindestens einem Fehlerverdeckungsverfahren generiert werden, und dass zur Generierung des gesamten zweiten Bildes im weiteren Bild (R) genau eine Information verwendet wird.
